**Europäisches Patentamt**

**European Patent Office**

**Office européen des brevets**

(19)

(11) Veröffentlichungsnummer: **0 115 022**
**A2**

(12) # EUROPÄISCHE PATENTANMELDUNG

(21) Anmeldenummer: **83112808.7**

(22) Anmeldetag: **20.12.83**

(51) Int. Cl.³: **C 08 G 12/32**
**C 08 G 12/34, C 08 G 12/40**
**C 04 B 13/26**

(30) Priorität: **30.12.82 DE 3248586**

(43) Veröffentlichungstag der Anmeldung:
**08.08.84 Patentblatt 84/32**

(84) Benannte Vertragsstaaten:
**DE FR GB IT NL**

(71) Anmelder: **BASF Aktiengesellschaft**
**Carl-Bosch-Strasse 38**
**D-6700 Ludwigshafen(DE)**

(72) Erfinder: **Eisele, Wolfgang, Dr.**
**Niedererdstrasse 103**
**D-6700 Ludwigshafen(DE)**

(72) Erfinder: **Etling, Hans, Dr.**
**Pommernstrasse 12**
**D-6701 Dannstadt-Schauernheim(DE)**

(72) Erfinder: **Franzmann, Gernot, Dr.**
**Im Woogtal 13**
**D-6719 Bobenheim(DE)**

(54) Verfahren zur Herstellung von hochkonzentrierten, niederviskosen und besonders lagerstabilen wässrigen Lösungen von Melamin-Formaldehyd-Kondensationsprodukten und deren Verwendung zur Betonverflüssigung.

(57) Konzentrierte, niederviskose wäßrige Lösungen von Melamin-Formaldehyd-Kondensationsprodukten, die durch zweistufige Kondensation von Melamin, Formaldehyd und Alkalisulfit hergestellt sind, wobei in der ersten Stufe bei pH 7,5 bis 9,5 und 80 bis 100°C, in der zweiten Stufe bei pH 3 bis 6 und 80 bis 100°C sowie unter Zusatz von 0,1 bis 2 gew.-% 3 bis 5 Ringkohlenstoffatome aufweisenden cyclischen Lactamen und/oder ein Sulfonsäureamid kondensiert wurde, sind besonders lagerstabil und eignen sich besonders gut zur Verflüssigung von Betonmischungen.

EP 0 115 022 A2

Croydon Printing Company Ltd.

Verfahren zur Herstellung von hochkonzentrierten, niederviskosen und besonders lagerstabilen wäßrigen Lösungen von Melamin-Formaldehyd-Kondensationsprodukten und deren Verwendung zur Betonverflüssigung

Die Erfindung betrifft ein Verfahren zur Herstellung von konzentrierten wäßrigen Lösungen aus Melamin, Formaldehyd und Alkalisulfiten, die dafür geeignet sind, Betonmischungen zu verflüssigen.

Aus der DE-PS 1 671 017 ist es schon lange bekannt, Sulfit- oder Sulfonsäure- modifizierte Melamin-Formaldehyd-Harze in wäßriger Lösung herzustellen, die zur Verflüssigung von Betonmischungen geeignet sind. Derartige wäßrige Lösungen können im allgemeinen nur bei Konzentrationen von etwa 20 bis 30 % hergestellt und gelagert werden. In der deutschen Patentschrift 1 671 017 wird zwar auch auf die Herstellung höherkonzentrierter Lösungen hingewiesen, doch sollen für deren Herstellung anstelle des Melamins N-sulfonierte Melamine, wie N-monosulfoniertes Acetoguanamin und N-sulfoniertes Benzoguanamin eingesetzt werden, die schwer zugänglich und teuer sind und zuerst synthetisiert und isoliert werden müssen. Derartige sulfonierte Melamine haben daher als Ausgangsprodukte für derartige Betonverflüssigungsmittel in der Praxis keinen Eingang gefunden. Ein weiterer Nachteil der Sulfit- oder Sulfonsäure-modifizierten Melamin-Formaldehydharze der DE-PS 1 671 017 ist deren verhältnismäßig hohe Viskosität, die beim praktischen Einsatz derartiger Lösungen, z.B. in Dosierpumpen und langen Leitungen stört. In der CH-PS 602 809 wurde daher schon vorgeschlagen, Gemische aus Melamin und Harnstoff einzusetzen, um zu niedrigviskosen Lösungen zu gelangen, doch muß in diesem Fall die Kondensation in einem mehrstufigen Verfahren in zeitraubender Weise durchgeführt werden. Zur Vermeidung dieser Nachteile wurde daher in der EP-Patentanmeldung 59 353 zur Herstellung von konzentrierten niedrigviskosen wäßrigen Lösungen von Melamin-Formaldehyd-Harzen schon vorgeschlagen, Melamin und Formaldehyd in einem zweistufigen Verfahren zunächst alkalisch unter Zusatz einer Verbindung (I) und sodann in leicht saurem Medium unter Zusatz einer Verbindung (II) zu kondensieren und nach Abschluß der Kondensation die wäßrige Lösung durch Zugabe einer Verbindung (III) alkalisch zu stellen. Als Verbindungen (I) kommen dabei u.a. Alkali- und Erdalkalisulfite, Alkali- und Erdalkalisulfamatsäuren, Aminosulfonsäuren, Hydroxycarbonsäuren usw., als Verbindungen (II) Aminocarbonsäuren, Hydroxycarbonsäuren, Sulfaminsäure oder Aminosulfonsäuren usw. in Frage. Als Verbindung (III) wird in den Beispielen Natronlauge oder Kalziumoxid eingesetzt. Bei diesen bekannten Verfahren kondensiert man in beiden Stufen vorzugsweise bei Temperaturen von 75 bis 100°C und erhält Lösungen mit Konzentrationen von ca. 40 bis 50 % und angeblich Viskositäten (unmittelbar nach der Herstellung) von 34 bis 210 cP. Tatsächlich Wd/Br erhält man jedoch beim Nacharbeiten der Beispiele des EP 59 353 im allgemeinen keine Melamin-Formaldehyd-Harze, sondern meist gallertartige hochviskose oder 2-phasig-trübe Produkte oder, falls flüssige Produkte erhalten werden, solche, deren Viskositäten bei der Lagerung bald merklich ansteigen.

Der vorliegenden Erfindung liegt nun die Aufgabe zugrunde, ein Verfahren zur Herstellung von konzentrierten, niederviskosen wäßrigen Lösungen von Melamin-Formaldehyd-Kondensationsprodukten, die eine verbesserte Lagerstabilität aufweisen, und die sich gut für die Zementverflüssigung eignen, zur Verfügung zu stellen.

Es wurde nun gefunden, daß man konzentrierte, niederviskose und besonders lagerstabile wäßrige Lösungen von Melamin-Formaldehyd-Kondensationsprodukten durch Kondensation von Melamin, Formaldehyd und Alkalisulfit im molaren Verhältnis von 0,9 bis 1,1 zu 2,9 bis 3,1 zu 0,9 bis 1,1 in alkalischem Medium und weitere Kondensationen in saurem Medium, wobei unmittelbar vor dem Ansäuren eine geringe Menge eines Aminogruppen aufweisenden Säurederivats zugesetzt und die Kondensation bei Temperaturen von 50 bis 100°C durchgeführt und die wäßrige Lösung nach Beendigung der Kondensation alkalisch gestellt wird, herstellen kann, indem man zunächst bei 80 bis 100°C und pH 7,5 bis 9,5 und dann nach Zusatz von 0,1 bis 2 Gew.-%, bezogen auf die gesamte Menge an Melamin, Formaldehyd und Alkalisulfit, eines 3- bis 5-Ringkohlenstoffatome aufweisenden cyclischen Lactams und/oder eines gegebenenfalls durch einen Methyl- und/oder Aminogruppe substituierten Benzol-Sulfonsäureamids bei 80 bis 100°C und pH 3 bis 6 kondensiert.

Die nach dem neuen Verfahren hergestellten konzentrierten niederviskosen wäßrigen Lösungen haben im allgemeinen einen gegenüber den Produkten der veröffentlichten europäischen Patentanmeldung 59 353 vor allem den Vorteil der gut reproduzierbar einstellbaren niederen Viskosität und eine Lagerstabilität, die bei Raumtemperatur ohne nennenswerten Viskositätsanstieg meist mindestens 12 Wochen beträgt. Dabei reichen überraschenderweise meist schon 0,3 bis 1,3 Gew.-% der cyclischen Lactame und/oder der aromatischen Sulfonsäureamide aus. Als cyclische Lactame mit 3 bis 5 Ringkohlenstoffatomen kommen vor allem $\varepsilon$-Caprolactam, das bevorzugt wird, sowie Pyrrolidon und ferner Piperidon in Frage. Geeignete aromatische Sulfonamide sind: Benzolsulfonamid, substituierte Benzolsulfonamide, z.B. Toluolsulfonsäureamide, wie besonders o-, p-Toluolsulfonamid und Sulfanilamid sowie ferner die N-Methylderivate der genannten Sulfonamide.

Als Alkalisulfite kommen für das neue Verfahren die hierfür üblichen Verbindungen wie besonders Natriumdisulfit, Natriumbisulfit, Kaliumdisulfit, Kaliumbisulfit oder Natriumformaldehydsulfoxylat in Betracht.

Nach der zweiten Stufe der Kondensation wird das Reaktionsgemisch, d.h. die konzentrierte, niederviskose wäßrige Lösung des Melamin-Formaldehyd-Kondensationsproduktes alkalisch gestellt, z.B. durch Zusatz von wäßriger Natronlauge, die meist eine Konzentration von 20 bis 50, insbesondere von 25 bis 30 Gew.-% hat oder durch wäßrige Lösungen von Ammoniak oder Aminen, z.B. Alkylolaminen, wie besonders Diethyl-ethanolaminen, Monoethanolamin, Diethylenamin und Triethanolamin sowie auch von Alkylenaminen, wie besonders Ethylendiamin, alle genannten Amine vorzugsweise zusammen mit wäßriger Natronlauge.

Bei der praktischen Durchführung der Kondensation weisen die Ausgangsstoffe, d.h. insbesondere das Melamin, der Formaldehyd und das Alkalisulfit dem Wasser in einer Konzentration von im allgemeinen 30 bis 60, insbesondere von 40 bis 50 Gew.-%, bezogen auf den gesamten Ansatz, zugesetzt. Man heizt dann auf die Reaktionstemperatur auf und hält diese Temperatur bis zum Ende der Kondensation im jeweils gewählten pH-Bereich.

Danach stellt man das Reaktionsgemisch auf pH 3 bis 6, vorzugsweise von 5 bis 6, fügt das cyclische Lactam und/oder das aromatische Sulfonsäureamid im allgemeinen in der technischen Lieferform, d.h. kristallin zu und kondensiert dann bei 80 bis 100°C während einer Zeitdauer von 2 bis 0,5 Stunden weiter.

Man läßt nun abkühlen und stellt alkalisch.

Es ist besonders im Hinblick auf die veröffentlichte europäische Patentanmeldung 59 353 überraschend, daß mit dem vorliegenden Verfahren schon beim Einsatz besonders geringer Mengen an cyclischem Lactam und/oder aromatischer Sulfonsäureamide eine erheblich verbesserte Lagerbeständigkeit von konzentrierten niederviskosen wäßrigen Lösungen der Melamin-Formaldehyd-Harze erhalten wird.

Ein besonderer Vorteil des neuen Verfahrens ist darin zu sehen, daß bei bloßer Einhaltung der Herstellparameter (Temperatur, Zeit, pH) die technischen Eigenschaften (Lagerbarkeit, Verflüssigung) besonders gut reproduziert werden können. Dies ist besonders bedeutungsvoll, weil bei Sulfit-modifizierten Produkten die betriebsübliche Endpunktskontrolle der Kondensation durch einen Wasserverträglichkeitstest nicht möglich ist.

Die erfindungsgemäß hergestellten Lösungen der Melamin- -Formaldehyd-Kondensationsprodukte können mit Vorteil zur Verflüssigung von Betonmischungen eingesetzt werden, wobei meist Zusätze von 0,3 bis 0,7 % (Festharz, bezogen auf Betonmischung) eine deutlich erhöhte Fließfähigkeit der Betonmischung bewirken.

Es ist zwar aus der deutschen Patentschrift 1 720 284 bekannt, die Lagerbeständigkeit von Tränkharzlösungen auf Basis von Melamin-Formaldehyd-Harzen durch Einkondensieren von cyclischen Lactamen in Mengen von 3 bis 15 Gew.-% zu verbessern und aus der südafrikanischen Patentschrift 764 660 ist es schon bekannt, wäßrige Melamin-Formaldehyd-Tränkharz-Lösungen herzustellen, die eine verbesserte Lagerstabilität aufweisen, indem man bei der Polykondensation 1 bis 4 Gew.-% Toluolsulfonsäureamid zusetzt.

Dabei handelt es sich jedoch um ausschließlich alkalisch kondensierte Harze, die einen niedrigen Kondensationsgrad aufweisen und deren wäßrige Lösungen praktisch keinen Elektrolyten enthalten. Außerdem handelt es sich dabei um solche Melamin-Formaldehyd-Harze, die nicht durch Sulfonsäuregruppen modifiziert sind. Die erstgenannten Verbindungen sind nur begrenzt wasserverdünnbar (ca. 1:max 2); während die Sulfonsäuregruppen-modifizierten beliebig wassermischbar sind.

Es konnte daher nicht erwartet werden, daß man durch demgegenüber verhältnismäßig geringe Mengen an cyclischen Lactamen und/oder Sulfonamiden bei der Kondensation in saurem Medium, bei der höhermolekulare Polykondensate erhalten werden, eine Verbesserung der Lagerstabilität und niedrigviskose Produkte erhält, zumal bei der Herstellung der Sulfogruppen modifizierten Formaldehyd-Harze durch die cyclischen Lactame und/oder die Sulfonamide kein derartiger Effekt beobachtet wird, wenn diese Zusätze bei der Kondensation von Anfang an, d.h. im alkalischen Bereich, in der Reaktionsmischung enthalten sind.

Die in den folgenden Beispielen angegebenen Teile sind Gew.-Teile. Die darin angegebenen Viskositäten wurden mit einem Fordbecher, Düse 4mm bei 40°C in Sekunden gemessen.

Beispiel 1

In einem Reaktionsgefäß wird ein Gemisch aus 850 Teilen Wasser, 367 Teilen Melamin, 302 Teilen Natriumdisulfit und 652 Teilen 40%iger wäßriger Formaldehyd-Lösung auf 90°C aufgeheizt und bei pH 9 5 Stunden auf dieser Temperatur gehalten.

Man gibt dann 5,4 Teile Sulfanilamid unter Rühren zu, läßt auf 80°C abkühlen, säuert mit 75%iger Schwefelsäure auf pH 6 an und kondensiert 1 Stunde weiter. Anschließend kühlt man auf 40°C ab und stellt den pH-Wert durch Zugabe von 25%iger wäßriger Natriumhydroxidlösung auf 9,5. Erhalten werden 2210 Teile einer 39,8%igen wäßrigen Lösung der Dichte $D_{20}$ 1,24, deren Viskosität 22 sec beträgt. Die Viskosität blieb auch nach 12 wöchiger Lagerung bei 40°C unter 300 sec.

## Beispiel 2

In einem Reaktionsgefäß wird ein Gemisch aus 850 Teilen Wasser, 367 Teilen Melamin, 302 Teilen Natriumdisulfit und 652 Teilen 6%ige wäßrige Formaldehyd-Lösung auf 98°C aufgeheizt und bei dieser Temperatur und pH 8 4,5 Stunden kondensiert. Anschließend kühlt man auf 90°C, fügt 11 Teile Toluolsulfonamid zu und stellt den pH-Wert durch Zugabe von ca. 1,5 Teilen 85%iger Ameisensäure auf 6,0. Dann wird 1 Stunde bei 90°C und pH 6 weiterkondensiert. Anschließend kühlt man auf 30°C und stellt den pH-Wert durch Zugabe von 25%iger Natronlaugelösung auf 10. Erhalten werden 2200 Teile einer 40,1%igen wäßrigen Lösung eines Sulfogruppen aufweisenden Melamin-Formaldehyd-Kondensats der Dichte $D_{20}$ 1,242, die eine Viskosität von 15 sec aufweist, die sich bei der Lagerung bei 40°C innerhalb von 20 Wochen praktisch nicht verändert.

Das gleiche Ergebnis erhält man, wenn man beim Alkalischstellen der auskondensierten Reaktionslösung zusätzlich zu der Natronlauge noch 0,95 g Diethanolamin einsetzt.

## Beispiel 3

In einem Reaktionsgefäß wird ein Gemisch von 850 Teilen Wasser, 367 Teilen Melamin, 302 Teile Natriumdisulfit und 652 Teilen einer 40%igen wäßrigen Formaldehyd-Lösung auf 98°C aufgeheizt und bei dieser Temperatur und pH 8,87 4 Stunden kondensiert. Man stellt dann den pH-Wert des Reaktionsgemisches durch Zugabe von ca. 1,2 Teilen 85%iger Ameisensäure auf 6, fügt 5,5 Teile Sulfanilamid zu und kondensiert eine weitere Stunde bei 90°C. Anschließend gibt man während des Abkühlens auf 30°C zunächst 5 Teile Diethanolamin und dann 0,3 Teile 25%ige wäßrige Natronlauge zu und stellt so den pH-Wert der erhaltenen Lösung auf 10.

Erhalten werden 2210 Teile einer niedrigviskosen Melamin-Formaldehyd-Kondensat-Lösung eines Feststoffgehaltes von 39,7 % und der Dichte $D_{20}$ = 1,240. Ihre Viskosität, die zunächst 21 sec beträgt, steigt bei der Lagerung bei 40°C innerhalb von 20 Wochen auf nur 42 sec an.

## Beispiel 4

In einem Reaktionsgefäß erhitzt man ein Gemisch aus 870 Teilen Wasser, 367 Teilen Melamin, 302 Teilen Natriumdisulfit und 590 Teilen 40%iger wäßriger Formaldehyd-Lösung auf 90°C und hält sie bei pH 8,7 7 Stunden bei dieser Temperatur. Man kühlt dann auf 80°C ab und fügt 11 Teile ℰ-Aminocaprolactam zu und säuert mit 75%iger Schwefelsäure auf pH 5,85 an. Dann wird noch 2 Stunden bei 80°C kondensiert, auf 40°C gekühlt und durch Zugabe von 25%iger

Natronlauge auf pH 9,7 gestellt. Erhalten werden 2220 Teile einer niederviskosen, 40%igen Melamin-Formaldehyd-Kondensat-Lösung der Dichte $D_{20}$ 1,239, deren Viskosität 17 sec beträgt und sich bei der Lagerung bei 40° innerhalb von 24 Wochen auf nur 90 sec erhöht.

## Beispiel 5

In einem Reaktionsgefäß werden 850 Teile Wasser, 367 Teile Melamin, 302 Teile Natriumdisulfit und 590 Teile 40%ige wäßrige Formaldehydlösung auf 90°C erwärmt und bei dieser Temperatur und pH 8,85 7 Stunden gehalten. Man kühlt dann auf 80°C ab, fügt 11 Teile ℰ-Aminocaprolactam zu und stellt den pH-Wert durch Zugabe von 85%iger Ameisensäure auf 6. Unter diesen Bedingungen wird zwei weitere Stunden kondensiert und dann auf 30°C abgekühlt und der pH-Wert des Reaktionsgemisches durch Zugabe von 25%iger wäßriger Natronlauge und von 6,5 Teilen Diethanolamin auf 10 gestellt. Erhalten werden 2202 Teile einer 40%igen wäßrigen Melamin-Formaldehyd-Kondensat-Lösung der Dichte $D_{20}$ 1,239, deren Viskosität 20 sec beträgt und sich innerhalb von 24 Wochen Lagerung bei 40°C auf nur 103 sec erhöht.

## Beispiel 6

In einem Reaktionsgefäß werden 550 Teile Wasser, 473 Teile Melamin, 390 Teile Natriumdisulfit und 765 Teile einer 40%igen wäßrigen Formaldehyd-Lösung auf 95°C erwärmt und bei pH 8,95 4 Stunden bei dieser Temperatur kondensiert. Man kühlt dann auf 50°C ab, fügt 11 Teile ℰ-Aminocaprolactam zu und stellt den pH-Wert des Reaktionsgemisches durch Zugabe von 85%iger Ameisensäure auf 6,5. Dann wird 2 Stunden bei 80°C weiterkondensiert. Anschließend stellt man den pH-Wert durch Zugabe von 15 Teilen Diethanolamin auf 10,5 und erhält 2302 Teile einer 50,5%igen wäßrigen, niederviskosen Melamin-Formaldehyd-Kondensat-Lösung der Dichte $D_{20}$ 1,310, deren Viskosität 34 sec beträgt und sich innerhalb von 16 Wochen Lagerung bei 40°C auf nur 190 sec erhöht.

Fügt man bei der Kondensation im sauren pH-Bereich kein Caprolactam zu, so erhält man unter sonst gleichen Bedingungen ein Produkt mit folgenden Eigenschaften:

Dichte $D_{20}$ 1,316, Viskosität sofort: 51 sec. Das Produkt wird nach 6 Wochen gallertig, dann fest.

Patentansprüche

1. Verfahren zur Herstellung von hochkonzentrierten, niederviskosen und besonders lagerstabilen wäßrigen Lösungen von Melamin-Formaldehyd-Kondensationsprodukten durch Kondensation von Melamin, Formaldehyd und Alkalisulfit im molaren Verhältnis von 0,9 bis 1,1 zu 2,9 bis 3,1 zu 0,9 bis 1,1 in wäßrig alkalischem Medium und weitere Kondensation in saurem Medium, wobei unmittelbar vor dem Ansäuern eine geringe Menge eines Aminogruppen aufweisenden Säurederivats zugesetzt und die Kondensation bei Temperaturen von 50 bis 100°C durchgeführt und die wäßrige Lösung nach Beendigung der Kondensation alkalisch gestellt wird, dadurch gekennzeichnet, daß man zunächst bei 80 bis 100°C und pH 7,5 bis 9,5 und dann nach Zusatz von 0,1 bis 2 Gew.-%, bezogen auf die gesamte Menge an Melamin, Formaldehyd und Alkalisulfit, eines 3 bis 5 Ringkohlenstoffatome aufweisenden cyclischen Lactams und/oder eines gegebenenfalls durch eine Methyl- und/oder Aminogruppe substituierten Benzolsulfonsäureamids bei 80 bis 100°C und pH 3 bis 6 kondensiert.

2. Verfahren nach Anspruch 1, dadurch gekennzeichnet, daß man als cyclisches Lactam $\varepsilon$-Aminocaprolactam einsetzt.

3. Verfahren nach Anspruch 1, dadurch gekennzeichnet, daß man als substituiertes Benzolsulfonsäureamid ortho- oder para-Toluolsulfonsäureamid oder deren Gemisch einsetzt.

4. Verfahren nach Anspruch 1, dadurch gekennzeichnet, daß man als substituiertes Benzolsulfonsäureamid Sulfanilamid einsetzt.

5. Verwendung von nach den Ansprüchen 1 bis 4 hergestellten hochkonzentrierten, niederviskosen wäßrigen Lösungen von Melamin-Formaldehyd-Kondensationsprodukten als Mittel zur Verflüssigung von Betonmischungen.